# EUROPÄISCHE PATENTSCHRIFT

(11) **EP 3 647 198 B1**
(45) Veröffentlichungstag und Bekanntmachung des Hinweises auf die Patenterteilung: **15.06.2022**
(21) Anmeldenummer: 19204472.5
(22) Anmeldetag: 22.10.2019
(51) Int. Cl.: B64D 13/02, B64D 13/06

(54) **FLUGZEUGKÄLTEANLAGE MIT EINER MOTOR-UNTERSTÜTZTEN KABINENABLUFTTURBINE**
AIRCRAFT REFRIGERATION SYSTEM WITH A MOTOR-ASSISTED CABIN AIR TURBINE
INSTALLATION FRIGORIFIQUE D'AVION DOTÉE D'UNE TURBINE D'AIR ÉVACUÉ DE LA CABINE SUPPORTÉE PAR MOTEUR

(30) Priorität: 29.10.2018 DE 102018126921
(43) Veröffentlichungstag der Anmeldung: 06.05.2020
(73) Patentinhaber: Airbus Operations GmbH, 21129 Hamburg (DE)
(72) Erfinder: Hennig, Oliver, 21129 Hamburg (DE); Klimpel, Frank, 21129 Hamburg (DE); Everth, Henning, 21129 Hamburg (DE)

(56) Entgegenhaltungen:
- EP-A1- 3 543 130
- EP-A2- 0 888 966
- WO-A1-2017/168074
- US-A- 4 312 191
- US-A- 6 058 715

## Beschreibung

Die Erfindung betrifft eine Flugzeugkälteanlage und ein Verfahren zum Betreiben einer Flugzeugkälteanlage.

Eine Flugzeugklimaanlage dient der Einstellung und Aufrechterhaltung eines gewünschten Drucks, einer gewünschten Temperatur und einer gewünschten Luftfeuchtigkeit in einer Flugzeugkabine. Darüber hinaus führt die Flugzeugklimaanlage ausreichend Frischluft in die Flugzeugkabine zu, um sicherzustellen, dass in der Flugzeugkabine ein vorgeschriebener Mindestanteil von Frischluft vorhanden ist. Aus der EP 2 735 510 A1 bzw. der US 2014/0144163 A1 ist eine Flugzeugklimaanlage bekannt, bei der eine mit einem zweiphasigen Kältemittel betriebene Kältemaschine dazu genutzt wird, von einem mehrstufigen Kompressor verdichtete Umgebungsluft zu kühlen. Die Kältemaschine umfasst einen Kältemittelkreislauf, in dem ein Kompressor, ein Verflüssiger, ein Expansionsventil und ein von zu kühlender Umgebungsluft durchströmter Verdampfer angeordnet sind. Einem Triebwerk oder einem Hilfstriebwerk des Flugzeugs entnommene Zapfluft wird zum Antreiben des Kompressors der Kältemaschine sowie zum Antreiben des mehrstufigen Kompressors zum Verdichten der Umgebungsluft genutzt.

Aus der DE 10 2015 222 193 A1 ist eine Flugzeugklimaanlage bekannt, bei der eine Kabinenabluftturbine Kabinenabluft expandiert und einen auf einer gemeinsamen Welle angeordneten Umgebungsluftkompressor antreibt. Dadurch wird der Druck der aus einer Flugzeugkabine abgeführten Abluft, der ab einer bestimmten Flughöhe den Umgebungsdruck außerhalb des Flugzeugs überschreitet, zur Energierückgewinnung genutzt.

EP 888 966 beschreibt eine Flugzeugkälteanlage mit eine Kabinenabluftturbine, die mit einer Kabinenabluftleitung verbunden und mit dem mindestens einen in der Umgebungsluftleitung angeordneten Umgebungsluftkompressor gekoppelt ist. Die Kabinenluftableitung ist dazu eingerichtet, die die Kabinenabluftleitung durchströmende Kabinenabluft zu expandieren und den mindestens einen in der Umgebungsluftleitung angeordneten Umgebungsluftkompressor anzutreiben.

Der Erfindung liegt die Aufgabe zugrunde, eine effizientere Nutzung einer Flugzeugklimaanlage zu ermöglichen. Ferner liegt der Erfindung die Aufgabe zugrunde, ein Verfahren zum Betreiben einer Flugzeugkälteanlage anzugeben.

Diese Aufgabe wird durch eine Flugzeugkälteanlage mit den Merkmalen des Anspruchs 1 und ein Verfahren zum Betreiben einer Flugzeugkälteanlage mit den Merkmalen des Anspruchs 9 gelöst.

Eine Flugzeugkälteanlage umfasst eine von Umgebungsluft durchströmbaren Umgebungsluftleitung, die mit einer Flugzeugkabine verbunden ist, um der Flugzeugkabine Umgebungsluft zuzuführen. Beispielsweise kann die Umgebungsluftleitung zusätzlich oder ausschließlich mit einem Mischer einer Flugzeugklimaanlage verbunden sein, um dem Mischer einer Flugzeugumgebung entnommene Umgebungsluft zuzuführen. Bei dem mit der Umgebungsluftleitung in Verbindung stehenden Mischer kann es sich um einen Vormischer oder einen Hauptmischer der Flugzeugklimaanlage handeln, dem neben der Umgebungsluft aus der Umgebungsluftleitung aus einer mittels der Flugzeugklimaanlage zu klimatisierenden Flugzeugkabine abgeführte Rezirkulationsluft zugeführt wird. In dem Mischer wird die Umgebungsluft aus der Umgebungsluftleitung mit der aus der Flugzeugkabine abgeführten Rezirkulationsluft gemischt. Die in dem Mischer erzeugte Mischluft wird schließlich zur Klimatisierung der Flugzeugkabine verwendet.

Ferner umfasst die Flugzeugkälteanlage mindestens einen in der Umgebungsluftleitung angeordneten Umgebungsluftkompressor zum Verdichten der die Umgebungsluftleitung durchströmenden Umgebungsluft. Insbesondere ab einer bestimmten Flughöhe ist es notwendig, die Umgebungsluft zu verdichten, um den gewünschten Druck der Luft für die zu klimatisierende Flugzeugkabine zu gewährleisten.

Die Flugzeugkälteanlage umfasst zudem eine Kabinenabluftturbine, die mit einer Kabinenabluftleitung verbunden und mit dem mindestens einen in der Umgebungsluftleitung angeordneten Umgebungsluftkompressor gekoppelt ist. Die Kabinenabluftturbine ist dazu eingerichtet ist, die Kabinenabluftleitung durchströmende Kabinenabluft zu expandieren und den mindestens einen in der Umgebungsluftleitung angeordneten Umgebungsluftkompressor anzutreiben. In der Flugzeugkälteanlage wird somit der Druck der aus einer Flugzeugkabine abgeführten Abluft, welcher im Flugbetrieb eines mit der Flugzeugkälteanlage ausgestatteten Flugzeugs ab einer bestimmten Flughöhe den Umgebungsdruck außerhalb des Flugzeugs überschreitet, zur Energierückgewinnung genutzt. Die aus der Kabinenabluft zurückgewonnene Energie wird zum Antreiben des mindestens einen Umgebungsluftkompressors verwendet. Durch die zusätzliche Zuführung von Umgebungsluft kann der Energieverbrauch der Flugzeugklimaanlage verringert werden, da weniger Zapfluft bei der Klimatisierung der Flugzeugkabine durch die Flugzeugklimaanlage benötigt wird.

Zudem umfasst die Flugzeugkälteanlage ein Getriebe, das dazu eingerichtet ist, die Kabinenabluftturbine mit dem Umgebungsluftkompressor zu koppeln und eine Drehzahl des Umgebungsluftkompressors einzustellen. Dies ermöglicht, sowohl den Umgebungsluftkompressor als auch die Kabinenabluftturbine in optimalen Drehzahlbereichen zu betreiben. Dadurch kann die Umgebungsluft der Flugzeugkabine effizienter zugeführt werden, als dies beispielsweise bei einer gemeinsamen festen Welle zwischen Kabinenabluftturbine und Umgebungsluftkompressor der Fall wäre.

Schließlich umfasst die Flugzeugkälteanlage einen mit dem Getriebe gekoppelten Motor, der dazu eingerichtet ist, den mindestens einen in der Umgebungsluftleitung angeordneten Umgebungsluftkompressor anzutreiben. Während die Kabinenabluftturbine in der Lage ist, eine Energierückgewinnung und somit eine Reduzierung des Energieverbrauchs der Flugzeugklimaanlage zu ermöglichen, erlaubt der Einsatz eines Getriebes und eines damit gekoppelten Motors die Verwendung des Umgebungsluftkompressors über einen vielfältigeren Zeitraum und vielfältigeren Einsatzzwecken. Insbesondere wird der Umgebungsluftkompressor mit einer weiteren Energiequelle ausgestattet, sodass der Umgebungsluftkompressor auch unabhängig von der durch die Kabinenabluftturbine zur Verfügung gestellten Leistung betrieben werden kann.

Beispielsweise kann der Umgebungsluftkompressor durch Steuern des Getriebes und/oder des Motors in Abhängigkeit des Betriebs der Kabinenabluftturbine der Flugzeugkabine bzw. dem Mischer die Umgebungsluftleitung durchströmende Umgebungsluft auf einen Soll-Kabinendruck verdichtet zuführen und/oder der Flugzeugkabine bzw. dem Mischer einen konstanten Volumenstrom verdichteter Umgebungsluft zuführen. So kann an dem Getriebe eine vorgegebene Übersetzung eingestellt werden und/oder der Motor mit einer vorgegebenen Drehzahl betrieben werden, sodass der Umgebungsluftkompressor konstant betrieben wird, auch in Fällen, in denen die Leistung der Kabinenabluftturbine schwankt. Durch den so erzielten konstanten Volumenstrom verdichteter Umgebungsluft können weitere Komponenten der Flugzeugklimaanlage, die der Flugzeugkabine bzw. dem Mischer Frischluft zuführen oder weitere in der Umgebungsluftleitung vorgesehene Umgebungsluftkompressoren, ebenfalls konstant betrieben werden, wodurch die gesamte Flugzeugklimatisierung effizienter ist. Zudem kann insgesamt ein größerer Volumenstrom verdichteter Umgebungsluft bereitgestellt werden, wodurch die übrigen Komponenten der Flugzeugklimaanlage weniger Zapfluft benötigen.

Die Flugzeugkälteanlage kann ein eigenständiges Aggregat sein, welches zusätzlich zu einer bestehenden Flugzeugklimaanlage in ein Flugzeug eingebaut werden kann. Somit kann die Flugzeugkälteanlage eine bestehende Flugzeugklimaanlage (in einem bereits bestehenden Flugzeug) unterstützen, wodurch diese effizienter betrieben werden kann. Selbstverständlich kann die Flugzeugkälteanlage auch beim Neubau eines Flugzeugs in die Flugzeugklimaanlage integriert werden.

Der Motor kann ein Hydraulikmotor sein oder alternativ ein Elektromotor. Während ein Hydraulikmotor keine oder weniger Kühlung benötigt als ein Elektromotor, sind Leitungen zur Versorgung des Hydraulikmotors mit Hydraulikflüssigkeit schwerer. Daher ist ein Hydraulikmotor dort gut geeignet, wo kurze Hydraulikleitungen benötigt werden, während ein Elektromotor dort gut geeignet ist, wo ausreichend Kühlung des Elektromotors bereits vorliegt.

Beispielsweise kann der Hydraulikmotor an ein Hydrauliksystem angeschlossen werden, das üblicherweise für die Betätigung eines Fahrwerks eines mit der Flugzeugkälteanlage ausgestatteten Flugzeugs vorgesehen ist. Flugzeugklimaanlagen werden oft im Bauch eines Flugzeugs installiert, in dem (oder zumindest in dessen Umgebung) üblicherweise auch ein Teil des Fahrwerks des Flugzeugs installiert ist. Dadurch kann die hohe Kapazität des Hydrauliksystems zum Ein- und Ausfahren des Fahrwerks vor und nach dessen Betätigung für einen Hydraulikmotor in der Flugzeugkälteanlage verwendet werden, ohne zusätzliche Kapazitäten des Hydrauliksystems installieren zu müssen.

Die Flugzeugkälteanlage kann ferner ein Gebläse umfassen, das dazu eingerichtet ist, Luft in einem Stauluftkanal zu bewegen. Ein solches Gebläse wird überwiegend im Bodenbetrieb des Flugzeugs verwendet, um in dem Stauluftkanal angeordnete Komponenten mit ausreichend Umgebungsluft zu versorgen. Die Flugzeugkälteanlage umfasst zudem einen Nebenstrang, der mit dem Motor und dem Gebläse gekoppelt ist und dazu eingerichtet ist, dass Gebläse anzutreiben. Der Nebenstrang kann durch eine gegenüberliegende Seite der Welle des Motors verwirklicht sein, die über das Getriebe mit dem Umgebungsluftkompressor gekoppelt ist. Alternativ kann der Nebenstrang auch eine eigenständige Welle des Motors sein, die zusätzlich zur Hauptwelle des Motors angetrieben wird.

Alternativ oder zusätzlich kann die Flugzeugkälteanlage ein Nebengetriebe umfassen, das dazu eingerichtet ist, den Motor mit dem Gebläse zu koppeln und eine Drehzahl des Gebläses einzustellen. Das Nebengetriebe kann ein eigenständiges Getriebe darstellen, welches mit einer Hauptwelle des Motors oder dem Nebenstrang gekoppelt ist. Alternativ kann das Nebengetriebe auch Teil des den Motor mit dem Umgebungsluftkompressor koppelnden Getriebes sein. Mit anderen Worten bietet das Nebengetriebe neben einer Antriebswelle für den Umgebungsluftkompressor eine weitere Antriebswelle für das Gebläse.

Dadurch kann der Motor nicht nur eine zweite Energiequelle des Umgebungsluftkompressor darstellen, sondern auch das Gebläse betreiben. Dies ermöglicht, auf einen eigenen Antrieb des Gebläses zu verzichten, wodurch Gewicht eingespart werden kann.

Die Flugzeugkälteanlage kann eine thermische Kopplungseinrichtung umfassen. Die thermische Kopplungseinrichtung wiederum kann dazu eingerichtet sein, mit einer Kältemaschine als Wärmesenke verbunden zu werden, um vor der Zufuhr der Umgebungsluft in die Flugzeugkabine Wärme von der die Umgebungsluftleitung durchströmenden Umgebungsluft an die Kältemaschine zu übertragen. Beispielsweise umfasst eine Kältemaschine einer Flugzeugklimaanlage einen von einem Kältemittel durchströmbaren Kältemittelkreislauf und kann einen in dem Kältemittelkreislauf angeordneten Kältemittelkompressor umfassen. Dabei kann es sich um eine Expansion Kältemaschine oder eine Kaltdampf Kältemaschine handeln. Die thermische Kopplungseinrichtung ist in diesem Fall zum Beispiel in Form eines als Verdampfer ausgebildeten Wärmetauschers umgesetzt und thermisch mit der Umgebungsluftleitung gekoppelt, um vor der Zufuhr der Umgebungsluft in die Flugzeugkabine oder den Mischer der Flugzeugklimaanlage Wärme von der die Umgebungsluftleitung durchströmenden Umgebungsluft an das in dem Kältemittelkreislauf zirkulierende Kältemittel zu übertragen. In der Flugzeugklimaanlage findet folglich ein weiterer Klimatisierungsprozess statt, bei dem die Umgebungsluft zunächst durch den Umgebungsluftkompressor verdichtet und anschließend durch die Übertragung von Wärme an das in dem Kältemittelkreislauf der Kältemaschine zirkulierende Kältemittel auf eine gewünschte Temperatur gekühlt wird. Durch eine entsprechende Vorverdichtung der Umgebungsluft in dem Umgebungsluftkompressor kann die Effizienz dieses Klimatisierungsprozesses je nach Bedarf gesteuert werden.

Die Flugzeugkälteanlage kann zudem eine Steuereinrichtung umfassen, die dazu eingerichtet ist, das Getriebe und/oder den Motor in Abhängigkeit des Betriebs der Kabinenabluftturbine zu steuern. So kann die Steuereinrichtung eine Übersetzung des Getriebes und/oder eine Drehzahl des Motors so einstellen, dass der Umgebungsluftkompressor konstant betrieben wird. Beispielsweise kann das Getriebe und/oder der Motor in Abhängigkeit des Betriebs der Kabinenabluftturbine so gesteuert werden, dass der Umgebungsluftkompressor einen konstanten Volumenstrom verdichteter Umgebungsluft der Flugzeugkabine bzw. dem Mischer zuführt. Ferner kann die Steuereinrichtung eine Leistung, eine Drehzahl und/oder ein Drehmoment der Kabinenabluftturbine erfassen und in Abhängigkeit der erfassten Größe das Getriebe und/oder den Motor steuern. Somit können Schwankungen der Kabinenabluftturbine über das Getriebe und/oder den Motor ausgeglichen werden. Selbstverständlich kann der Motor auch so von der Steuereinrichtung gesteuert werden, dass der Umgebungsluftkompressor ausschließlich durch den Motor angetrieben wird.

Schließlich ist die Steuereinrichtung auch dazu eingerichtet, einen Ausfall der Kältemaschine zu erfassen. In einem solchen Fall kann die Steuereinrichtung das Getriebe und/oder den Motor in Abhängigkeit des Ausfalls der Kältemaschine so steuern, dass der Umgebungsluftkompressor einen für Notfälle mindestens erforderlichen Volumenstrom verdichteter Umgebungsluft der Flugzeugkabine bzw. dem Mischer zuführt. Dies gewährleistet eine ausreichende Versorgung der Flugzeugkabine mit Frischluft. Alternativ oder zusätzlich kann die Steuereinrichtung auch dazu eingerichtet sein, das Getriebe und/oder den Motor so zu steuern, dass der Umgebungsluftkompressor einen für Notfälle mindestens erforderlichen Kabinendruck aufrechterhält.

Da der Ausfall der Kältemaschine insbesondere bei größeren Flughöhen aufgrund des damit einhergehenden Druckabfalls in der Flugzeugkabine problematisch ist, bietet die Flugzeugkälteanlage für diesen Fall eine gute Versorgung der Flugzeugkabine mit Frischluft. Insbesondere wenn die Flugzeugkälteanlage als separates Aggregat vorgesehen ist, kann so eine redundante Frischluftversorgung der Flugzeugkabine geschaffen werden. Zudem kann der Druckabfall in der Flugzeugkabine dadurch verlangsamt werden, dass ein Volumenstrom der Kabinenabluft möglichst schnell reduziert wird und stattdessen der Motor den Betrieb des Umgebungsluftkompressors übernimmt. Dies verlängert den Zeitraum, in dem der Flugzeugkabinendruck absinkt, oder verhindert ein vollständiges Absinken des Flugzeugkabinendrucks auf Umgebungsniveau. Dieser verlängerte Zeitraum erhöht die Sicherheit der Passagiere, sodass gegebenenfalls das Flugzeug ausreichend Zeit hat, auf eine sichere Reisehöhe zu sinken. Ferner ist es möglich, auf eine für den oben beschriebenen Notfall eines Druckabfalls in der Flugzeugkabine vorgesehene Notfallstauluftklappe zu verzichten. Diese Notfallstauluftklappe wird üblicherweise nur im Notfall geöffnet um über den Staudruck der Stauluft Frischluft in die Flugzeugkabine zu fördern. Wenn das Getriebe und/oder der Motor so eingestellt sind, dass der Umgebungsluftkompressor ausreichend Umgebungsluft (Frischluft) der Flugzeugkabine zur Verfügung stellt, kann auf eine Notfallstauluftklappe verzichtet werden, wodurch die Anzahl von Öffnungen und Klappen an der Außenhaut des Flugzeugs reduziert wird und somit die Aerodynamik des Flugzeugs verbessert wird.

Die Begriffe "stromabwärts" bzw. "stromaufwärts" beziehen sich hier auf die Strömungsrichtung eines Fluids durch die jeweils beschriebene Leitung, beispielsweise Stauluft in einem Stauluftkanal oder Umgebungsluft in einer Umgebungsluftleitung oder Abluft in einer Abluftleitung.

Ferner kann die Flugzeugkälteanlage ein Kabinenabluftventil umfassen, das stromabwärts eines Auslasses der Kabinenabluftturbine angeordnet ist und dazu eingerichtet ist, die die Kabinenabluftleitung durchströmende Kabinenabluft wahlweise über einen ersten Abschnitt der Kabinenabluftleitung in einen Stauluftkanal stromaufwärts mindestens eines in dem Stauluftkanal angeordneten Wärmetauschers oder über einen zweiten Abschnitt der Kabinenabluftleitung zu einem Auslass, der die Kabinenabluft in eine Richtung entgegengesetzt einer Flugrichtung eines mit der Flugzeugkälteanlage ausgestatteten Flugzeugs in eine Umgebung des Flugzeugs ablässt, leitet. Dies erlaubt einerseits, die expandierte Kabinenabluft zur Kühlung des in dem Stauluftkanal angeordneten mindestens einen Wärmetauschers zu nutzen. Dadurch kann der Stauluftbedarf der dem mindestens einen Wärmetauscher zugehörigen Flugzeugklimaanlage und folglich der durch die Zufuhr von Stauluft in die Flugzeugklimaanlage verursachte aerodynamische Widerstand verringert werden. Andererseits erlaubt die Führung der Kabinenabluft über den zweiten Abschnitt zu dem Auslass, die expandierte Kabinenabluft zur Reduzierung von Verwirbelungen an dem Auslass eines Stauluftkanals oder anderem Abluftauslass an einer Außenhaut des Flugzeugs zu nutzen. Mit anderen Worten wird der Schub verbessert, da der Auslass der Kabinenabluft entgegengesetzt der Flugrichtung einen zusätzlichen Impuls auf das Flugzeug bietet. Dies alles ermöglicht eine Verringerung des Treibstoffverbrauchs des Flugzeugs. Selbstverständlich kann das Kabinenabluftventil auch so eingestellt werden, dass die Kabinenabluft teilweise in den ersten Abschnitt der Kabinenabluftleitung und ebenfalls teilweise in den zweiten Abschnitt der Kabinenabluftleitung geleitet wird.

Optional hierzu kann das Kabinenabluftventil mit einem Temperatursensor ausgestattet sein oder mit einem Temperatursensor verbunden sein oder unter Zuhilfenahme eines Temperatursensors gesteuert werden (beispielsweise durch die Steuereinrichtung). Der Temperatursensor ist dazu eingerichtet, eine die Kabinenabluftleitung durchströmende Kabinenabluft stromabwärts der Kabinenabluftturbine zu messen. In einem Beispiel ist der Temperatursensor dazu eingerichtet, basierend auf der gemessenen Temperatur der Kabinenabluft das Kabinenabluftventil zu steuern. Alternativ wird die Steuerung durch andere Komponenten (beispielsweise Aktuatoren für das Ventil) in Abhängigkeit der gemessenen Temperatur vorgenommen. In einer sehr einfachen Ausgestaltung ist das Kabinenabluftventil mit einem formverändernden Aktuator ausgestattet, der abhängig von einer Temperatur (hier der Kabinenablufttemperatur) seine Form verändert. Beispielsweise kann ein Bimetall verwendet werden.

In einem Abschnitt der Umgebungsluftleitung kann optional stromabwärts des Umgebungsluftkompressors ein mit der Kabinenabluftleitung stromaufwärts der Kabinenabluftturbine thermisch gekoppelter Nachheizer angeordnet sein. Der Nachheizer ist vorzugsweise dazu eingerichtet, Wärme von der die Umgebungsluftleitung stromabwärts des Umgebungsluftkompressors durchströmenden Umgebungsluft an die die Kabinenabluftleitung stromaufwärts der Kabinenabluftturbine durchströmende Kabinenabluft zu übertragen. Mittels des Nachheizers kann die Temperatur der in die Kabinenabluftturbine eintretenden Kabinenabluft erhöht und folglich die Leistung der Kabinenabluftturbine gesteigert werden.

Bei einem Verfahren zum Betreiben einer Flugzeugkälteanlage wird Umgebungsluft durch eine Umgebungsluftleitung, die mit einer Flugzeugkabine und/oder einem Mischer einer Flugzeugklimaanlage verbunden ist, geleitet, um der Flugzeugkabine bzw. dem Mischer Umgebungsluft zuzuführen. Die die Umgebungsluftleitung durchströmende Umgebungsluft wird in mindestens einem in der Umgebungsluftleitung angeordneten Umgebungsluftkompressor verdichtet. Ferner wird in einer mit einer Kabinenabluftleitung verbundenen Kabinenabluftturbine die Kabinenabluftleitung durchströmende Kabinenabluft expandiert, wobei die Kabinenabluftturbine mit dem mindestens einen in der Umgebungsluftleitung angeordneten Umgebungsluftkompressor gekoppelt ist und den mindestens einen in der Umgebungsluftleitung angeordneten Umgebungsluftkompressor antreibt.

Ferner kann das Verfahren ein Einstellen einer Drehzahl des Umgebungsluftkompressors durch ein Getriebe umfassen, wobei das Getriebe dazu eingerichtet ist, die Kabinenabluftturbine mit dem Umgebungsluftkompressor zu koppeln, und schließlich ein Antreiben des mindestens einen in der Umgebungsluftleitung angeordneten Umgebungsluftkompressors durch einen mit dem Getriebe gekoppelten Motor umfassen.

In einer Ausgestaltungsvariante, in der der Motor ein Hydraulikmotor ist, wird Hydraulikflüssigkeit zu dem Hydraulikmotor von einem Hydrauliksystem für die Betätigung eines Fahrwerks eines Flugzeugs zugeführt.

Ferner kann Luft in einem Stauluftkanal durch ein Gebläse bewegt werden, wobei der Motor mit dem Gebläse durch einen Nebenstrang, der dazu eingerichtet ist, dass Gebläse anzutreiben, gekoppelt ist. Alternativ oder zusätzlich wird der Motor mit dem Gebläse durch ein Nebengetriebe, das dazu eingerichtet ist, eine Drehzahl des Gebläses einzustellen, gekoppelt.

Das Verfahren kann zudem verschiedene von einer Steuereinrichtung durchgeführte Steuerungsschritte umfassen. Beispielsweise wird das Getriebe und/oder der Motor in Abhängigkeit des Betriebs der Kabinenabluftturbine gesteuert. Alternativ oder zusätzlich kann das Getriebe und/oder der Motor in Abhängigkeit des Betriebs der Kabinenabluftturbine so gesteuert werden, dass der Umgebungsluftkompressor einen konstanten Volumenstrom verdichteter Umgebungsluft der Flugzeugkabine bzw. dem Mischer zuführt.

Ebenfalls alternativ oder zusätzlich kann das Getriebe und/oder der Motor in Abhängigkeit eines Ausfalls einer Kältemaschine so gesteuert werden, dass der Umgebungsluftkompressor einen für Notfälle mindestens erforderlichen Volumenstrom verdichteter Umgebungsluft der Flugzeugkabine bzw. dem Mischer zuführt. Alternativ oder zusätzlich kann das Getriebe und/oder den Motor so gesteuert werden, dass der Umgebungsluftkompressor einen für Notfälle mindestens erforderlichen Kabinendruck aufrechterhält. Hierbei wird optional eine Kältemaschine bereitgestellt, die einen von einem Kältemittel durchströmbare Kältemittelkreislauf umfasst. Die Kältemaschine wird als Wärmesenke thermisch mit der Umgebungsluftleitung gekoppelt, um vor der Zufuhr der Umgebungsluft in die Flugzeugkabine bzw. den Mischer Wärme von der die Umgebungsluftleitung durchströmenden Umgebungsluft an die Kältemaschine zu übertragen. Beispielsweise kann die Umgebungsluftleitung thermisch mit dem in dem Kältemittelkreislauf zirkulierende Kältemittelgekoppelt werden.

Eine bevorzugte Ausführungsform der Erfindung wird nun anhand der beigefügten schematischen Zeichnungen näher erläutert, wobei
- Figur 1: eine Flugzeugkälteanlage zur Klimatisierung einer Flugzeugkabine zeigt,
- Figur 2: ein Verfahren zum Betreiben einer Flugzeugkälteanlage zeigt, und
- Figur 3: ein Flugzeug mit einer Flugzeugkälteanlage zeigt.

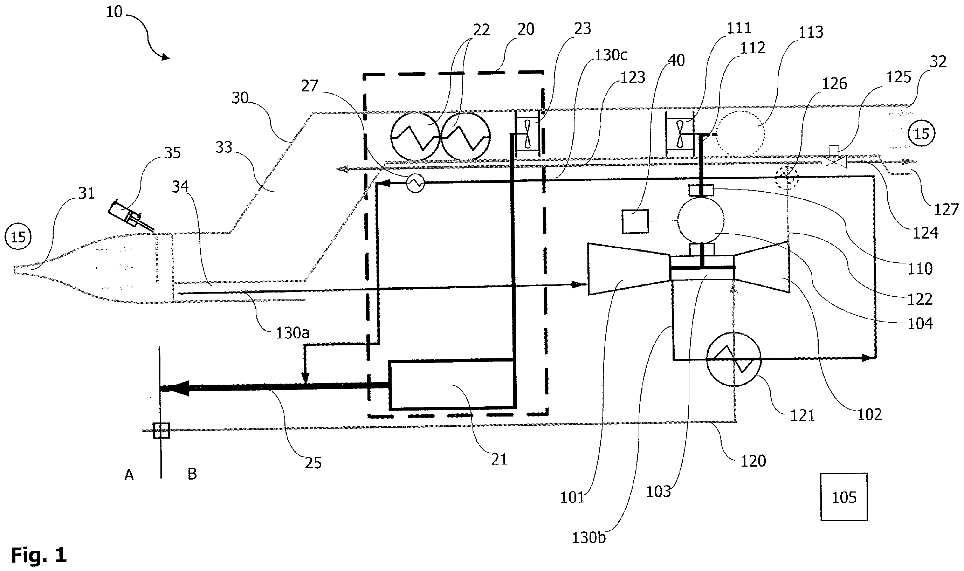

Eine in Figur 1 veranschaulichte Flugzeugkälteanlage 10 umfasst eine von Umgebungsluft durchströmbare Umgebungsluftleitung 130, die mit einer Flugzeugkabine A verbunden ist, um der Flugzeugkabine A die einer Flugzeugumgebung 15 entnommene Umgebungsluft zuzuführen. Dabei kann die Umgebungsluftleitung 130 beispielsweise mit einem Mischer 25 einer bereits bestehenden oder zusätzlich installierten Flugzeugklimaanlage verbunden sein, um dem Mischer 25 die der Flugzeugumgebung 15 entnommene Umgebungsluft zuzuführen. In dem Mischer 25 wird die Umgebungsluft aus der Umgebungsluftleitung 130 mit aus einer Flugzeugkabine abgeführter Rezirkulationsluft gemischt. Die in dem Mischer 25 erzeugte Mischluft wird schließlich zur Klimatisierung der Flugzeugkabine verwendet.

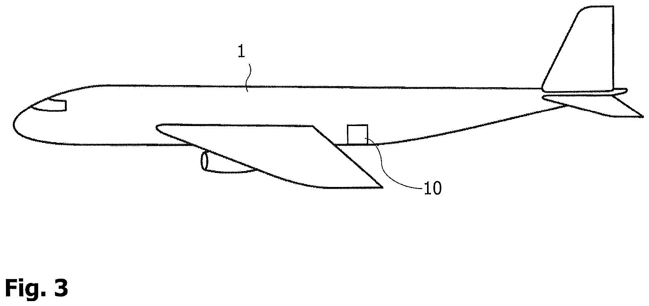

Die Flugzeugkabine ist in Figur 1 abstrakt durch den Bereich "A" gekennzeichnet, bei dem es sich um einen Bereich des Flugzeugs 1 (Figur 3) handelt, der über die Flugzeugkälteanlage 10 und/oder die Flugzeugklimaanlage mit Druck beaufschlagt werden kann, der größer ist als ein Druck in der Flugzeugumgebung 15. Der mit "B" gekennzeichnete Bereich ist ein nicht mit Druck beaufschlagter Bereich des Flugzeugs. Der hier herrschende Druck entspricht dem Druck in der Flugzeugumgebung 15 oder zumindest einem Druck, der niedriger ist als in der Flugzeugkabine.

Die Flugzeugklimaanlage ist mit einer Kältemaschine 20 ausgestattet, die einen Kältemittelkreislauf aufweist. Das in den Kältemittelkreislauf verwendete Kältemittel kann ein zweiphasiges Kältemittel, beispielsweise R134A (CH2F-CF3), CO2 oder R-245fa (1,1,1,3,3-Pentafluorpropan), sein. Die Kältemaschine kann ferner einen in dem Kältemittelkreislauf angeordneten Kältemittelkompressor 21 umfassen.

Die Umgebungsluftleitung 130, insbesondere in einem Abschnitt 130c der Umgebungsluftleitung 130, ist mit der Kältemaschine 20 als Wärmesenke thermisch gekoppelt, um vor der Zufuhr der Umgebungsluft in die Flugzeugkabine A und/oder den Mischer 25 Wärme von der die Umgebungsluftleitung 130 durchströmenden Umgebungsluft an die Kältemaschine 20 zu übertragen. Neben dem Kältemittelkompressor 21 können in dem Kältemittelkreislauf ein Verflüssiger, ein Kältemittelsammler, ein Expansionsventil (alle nicht dargestellt) und ein Verdampfer 27, der die Kältemaschine 20 thermisch mit der Umgebungsluftleitung 130 koppelt, angeordnet sein.

Die Umgebungsluftleitung 130 umfasst einen ersten Abschnitt 130a, in dem ein Umgebungsluftkompressor 101 zum Verdichten der den ersten Abschnitt 130a der Umgebungsluftleitung 130 durchströmenden Umgebungsluft angeordnet ist. Der Umgebungsluftkompressor 101 ist mit einer Kabinenabluftturbine 102 gekoppelt, die mit einer Kabinenabluftleitung 120 verbunden ist. Im Betrieb expandiert die Kabinenabluftturbine 102 die Kabinenabluftleitung 120 durchströmende Kabinenabluft und treibt den Umgebungsluftkompressor 101 an. Dadurch kann der Druck der aus einer Flugzeugkabine A abgeführten Abluft, welcher im Flugbetrieb eines mit der Flugzeugkälteanlage 10 ausgestatteten Flugzeugs 1 ab einer bestimmten Flughöhe den Umgebungsdruck außerhalb des Flugzeugs 1 überschreitet, zur Energierückgewinnung genutzt werden. Die aus der Kabinenabluft zurückgewonnene Energie wird zum Antreiben des Umgebungsluftkompressors 101 verwendet.

Die Kopplung des Umgebungsluftkompressors 101 mit der Kabinenabluftturbine 102 erfolgt über ein Getriebe 103, das dazu eingerichtet ist, eine Drehzahl des Umgebungsluftkompressors 101 einzustellen. Zudem kann ein mit dem Getriebe 103 gekoppelter Motor 104 den in der Umgebungsluftleitung 130 angeordneten Umgebungsluftkompressor 101 (zusätzlich oder ausschließlich) antreiben. Dies ermöglicht einen kontinuierlichen Betrieb des Umgebungsluftkompressors 101 und/oder einen Betrieb des Umgebungsluftkompressors 101 in seinem optimalen Drehzahlbereich, unabhängig von dem Druckunterschied zwischen der abgeführten Kabinenabluft und dem Umgebungsdruck. Hierfür ist das Getriebe 103 mit zwei Antriebssträngen ausgestattet, an denen der Motor 104 bzw. die Kabinenabluftturbine 102 angeschlossen sind, und mit einem Ausgangsstrang ausgestattet, an dem der Umgebungsluftkompressor 101 angeschlossen ist.

Der Umgebungsluftkompressor 101 wird von einer Steuereinrichtung 105 der Flugzeugkälteanlage 10 derart gesteuert, dass er die den ersten Abschnitt 130a der Umgebungsluftleitung 130 durchströmende Umgebungsluft auf den Soll-Kabinendruck in der zu klimatisierenden Flugzeugkabine A verdichtet. Alternativ oder zusätzlich kann der Umgebungsluftkompressor 101 auch einen konstanten Volumenstrom verdichteter Umgebungsluft bereitstellen. Die Steuereinrichtung 105 kann insbesondere das Getriebe 103 und/oder den Motor 104 in Abhängigkeit des Betriebs der Kabinenabluftturbine 102 steuern. Beispielsweise kann eine Übersetzung des Getriebes 103 bzw. eine Drehzahl des Motors 104 durch die Steuereinrichtung 105 so eingestellt werden, dass der kontinuierliche Betrieb des Umgebungsluftkompressors 101 gewährleistet ist. Ein weiterer Steuerungsfall ist der Ausfall der Kältemaschine 20, wobei die Steuereinrichtung 105 den Umgebungsluftkompressor 101 derart steuert, dass er einen für Notfälle mindestens erforderlichen Volumenstrom verdichteter Umgebungsluft der Flugzeugkabine A und/oder dem Mischer 25 zuführt und/oder dass der Umgebungsluftkompressor 101 der Flugzeugkabine A und/oder dem Mischer 25 Umgebungsluft mit dem für Notfälle erforderlichen Druck zuführt.

Die Steuereinrichtung 105 der Flugzeugkälteanlage 10 kann ferner den Betrieb der Kabinenabluftturbine 102 in Abhängigkeit einer Differenz zwischen einem Druck der Kabinenabluft und einem Druck der der Flugzeugkälteanlage 10 über die Umgebungsluftleitung 130 aus der Flugzeugumgebung zugeführten Umgebungsluft steuern. Beispielsweise kann die Steuereinrichtung 105 den Betrieb der Kabinenabluftturbine 102 derart steuern, dass die Kabinenabluftturbine 102 nur dann betrieben wird, wenn der Druck der Kabinenabluft höher als der Druck der der Flugzeugkälteanlage 10 über die Umgebungsluftleitung 130 aus der Flugzeugumgebung zugeführte Umgebungsluft ist. Eine besonders einfache Steuerung des Betriebs der Kabinenabluftturbine 102 ist dann möglich, wenn die Steuereinrichtung 105 den Betrieb der Kabinenabluftturbine 102 in Abhängigkeit der Flughöhe eines mit der Flugzeugkälteanlage 10 ausgestatteten Flugzeugs 1 steuert und die Kabinenabluftturbine 102 beispielsweise nur dann in Betrieb nimmt, wenn das Flugzeug 1 in einer vorbestimmten Mindestflughöhe von beispielsweise 6000 m fliegt, in der der gegenüber dem normalen Atmosphärendruck auf Meeresspiegelhöhe verringerte Umgebungsdruck geringer ist als der Druck der aus der Flugzeugkabine abgeführten Abluft.

Die Steuereinrichtung 105 kann den Betrieb des Motors 104 entsprechend steuern. Beispielsweise kann der Motor 104 den Umgebungsluftkompressor 101 alleine betreiben, wenn die Kabinenabluftturbine 102 (noch) nicht in Betrieb ist. Hierbei kann auch eine Übersetzung des Getriebes 103 verändert werden, um unterschiedliche Drehzahlen zwischen Kabinenabluftturbine 102 und Motor 104 auszugleichen. Im Fall, dass der Motor 104 zusätzlich zur Kabinenabluftturbine 102 betrieben wird, kann das Getriebe 103 auch so eingestellt werden, dass der Motor 104 bzw. die Kabinenabluftturbine 102 unterstützend den Umgebungsluftkompressor 101 antreibt.

Bei dem Motor 104 kann es sich um einen Elektromotor handeln. Alternativ kann auch ein Hydraulikmotor eingesetzt werden. Der Hydraulikmotor 104 lässt sich an ein Hydrauliksystem 40 anschließen. Dieses Hydrauliksystem 40 kann ein bestehendes Hydrauliksystem sein, wie zum Beispiel ein Hydrauliksystem für die Betätigung eines Fahrwerks eines mit der Flugzeugkälteanlage 10 ausgestatteten Flugzeugs. Dies hat den Vorteil, dass ein ausreichend leistungsstarkes Hydrauliksystem verwendet werden kann, welches in den meisten Betriebsphasen des Flugzeugs 1 nicht benötigt wird, ohne ein zusätzliches Hydrauliksystem für den Motor 104 installieren zu müssen.

Eine weitere Nutzung des Motors 104 kann durch ein Gebläse 111 erfolgen. Das Gebläse 111 ist in einem Stauluftkanal 30 angeordnet und kann Stauluft durch den Stauluftkanal 30 bewegen/fördern. Das Gebläse 111 kann direkt mit dem Motor 104 gekoppelt sein, sodass eine Drehzahl des Motors 104 eine Drehzahl des Gebläses 111 bestimmt. Alternativ kann ein Nebenstrang 112 mit dem Motor 104 und dem Gebläse 111 gekoppelt sein, um das Gebläse 111 anzutreiben. Ebenfalls alternativ oder zusätzlich kann ein Nebengetriebe 110 vorgesehen sein, das den Motor 104 mit dem Gebläse 111 koppelt und eine Drehzahl des Gebläses 111 einstellen kann. Der Motor 104 kann dabei das Gebläse 111 alleine antreiben oder einen bereits vorhandenen Gebläsemotor 113 unterstützen.

In der dargestellten Ausführungsvariante ist der Stauluftkanal 30 an einer Stauluftkanalöffnung 31 mit der Flugzeugumgebung 15 verbunden. Ein Querschnitt der Stauluftkanalöffnung 31 kann durch eine bewegliche Klappe 35 verändert werden und an die benötigte Stauluftmenge angepasst werden. Die Umgebungsluftleitung 130 ist in einem in Strömungsrichtung der Stauluft stromaufwärts gelegenen Abschnitt 34 des Stauluftkanals 30 angeschlossen, sodass Umgebungsluft durch die Stauluftkanalöffnung 31 in den ersten Abschnitt 130a der Umgebungsluftleitung 130 strömen kann. Ein weiterer Abschnitt 33 des Stauluftkanals 30 kann bis zu einer stromabwärts gelegenen Auslassöffnung 32 des Stauluftkanals 30 führen. Innerhalb des Stauluftkanals 30 kann die Stauluft für verschiedene Zwecke eingesetzt werden. Beispielsweise können Wärmetauscher 22 (in Form eines oder mehrerer Verflüssiger) der Kältemaschine 20 in dem Abschnitt 33 des Stauluftkanals 30 angeordnet sein. Ferner kann die Kältemaschine 20 ein eigenes Gebläse 23 aufweisen, welches in dem Abschnitt 33 des Stauluftkanals 30 angeordnet ist. Das Gebläse 23 ist optional, und wird nur benötigt, falls das Gebläse 111 für die Kühlung der Wärmetauscher 22 der Kältemaschine 20 nicht ausreichend dimensioniert werden kann.

In einem zweiten Abschnitt 130b der Umgebungsluftleitung 130 stromabwärts des Umgebungsluftkompressors 101 ist ein mit der Kabinenabluftleitung 120 stromaufwärts der Kabinenabluftturbine 102 thermisch gekoppelter Nachheizer 121 angeordnet. Die Begriffe "stromabwärts" bzw. "stromaufwärts" beziehen sich hier auf die Strömungsrichtung der Umgebungsluft durch den zweiten Abschnitt 130b der Umgebungsluftleitung 130 bzw. die Strömungsrichtung der Kabinenabluft durch die Kabinenabluftleitung 120. Im Betrieb überträgt der Nachheizer 121 Wärme von der die Umgebungsluftleitung 130 stromabwärts des Umgebungsluftkompressors 101 durchströmenden Umgebungsluft an die die Kabinenabluftleitung 120 stromaufwärts der Kabinenabluftturbine 102 durchströmende Kabinenabluft. Der Nachheizer 121 kann auch über eine Nachheizer-Bypassleitung (nicht gezeigt) umgangen werden, wobei die Nachheizer-Bypassleitung stromabwärts des ersten Umgebungsluftkompressors 101 und stromaufwärts des Nachheizers 121 von dem zweiten Abschnitt 130b der Umgebungsluftleitung 130 abzweigt und stromabwärts des Nachheizers 121 wieder in den zweiten Abschnitt 130b der Umgebungsluftleitung 130 mündet. Durch Steuerung eines entsprechenden Ventils an der Abzweigung in der Umgebungsluftleitung 130 in die Nachheizer-Bypassleitung wird ein selektiver Betrieb des Nachheizers 121 und folglich eine Steuerung der Temperatur der aus der Kabinenabluftturbine 102 austretenden Kabinenabluft ermöglicht.

In einer optionalen Ausgestaltung kann eine weitere thermische Kopplung zwischen Umgebungsluft in der Umgebungsluftleitung 130 und Kabinenabluft in der Kabinenabluftleitung 120 in einem Wärmetauscher 126 erfolgen. Der Wärmetauscher 126 ist in einem Abschnitt 122 der Kabinenabluftleitung 120 stromabwärts der Kabinenabluftturbine 102 angeordnet und thermisch mit einem dritten Abschnitt 130c der Umgebungsluftleitung 130 gekoppelt. Der dritte Abschnitt 130c ist bezogen auf die Strömungsrichtung der Umgebungsluft durch die Umgebungsluftleitung 130 stromabwärts des zweiten Abschnitts 130b der Umgebungsluftleitung 130 und des Nachheizers 121 angeordnet. Dadurch kann eine Vorkühlung der durch die Umgebungsluftleitung 130 (hier im Abschnitt 130c) strömenden Umgebungsluft erfolgen.

In einem stromabwärts der Kabinenabluftturbine 102 gelegenen Abschnitt 122 der Kabinenabluftleitung 120 ist ein Kabinenabluftventil 125 angeordnet. Dieses Kabinenabluftventil 125 kann wahlweise die Kabinenabluftleitung 120 durchströmende Kabinenabluft über einen ersten Abschnitt 123 der Kabinenabluftleitung 120 in den Stauluftkanal 30 oder über einen zweiten Abschnitt 124 der Kabinenabluftleitung 120 zu einem Auslass 127 leiten. Der erste Abschnitt 123 der Kabinenabluftleitung 120 mündet in den Stauluftkanal 30 stromaufwärts der in dem Stauluftkanal 30 angeordneten Wärmetauscher 22. Der Auslass 127 ist so an einer Außenseite des Flugzeugs 1 angeordnet, dass die Kabinenabluft in eine Richtung entgegengesetzt der Flugrichtung des Flugzeugs 1 abgelassen wird. Dadurch kann im Flugbetrieb die Entstehung von Verwirbelungen an dem Stauluftkanalauslass 32 verringert werden. Das Kabinenabluftventil 125 kann auch Teilströme der Kabinenabluft gleichzeitig in den ersten Abschnitt 123 der Kabinenabluftleitung 120 und den zweiten Abschnitt 124 der Kabinenabluftleitung 120 leiten, beispielsweise wenn nur eine geringe Menge Kabinenabluft zur Kühlung der Wärmetauscher 22 der Kältemaschine 20 benötigt wird.

Das Kabinenabluftventil 125 lässt sich mit einem Temperatursensor (nicht gesondert dargestellt) ausstatten oder verbinden, der dazu eingerichtet ist, eine die Kabinenabluftleitung 120 durchströmende Kabinenabluft stromabwärts der Kabinenabluftturbine 102 zu messen, um basierend auf der gemessenen Temperatur der Kabinenabluft das Kabinenabluftventil 125 zu steuern. Beispielsweise kann der Temperatursensor mit der Steuereinrichtung 105 verbunden sein, die das Kabinenabluftventil 125 steuert. Alternativ kann der Temperatursensor auch als oder in einem Aktuator des Kabinenabluftventils 125 integriert sein, sodass das Kabinenabluftventil 125 direkt in Abhängigkeit der Temperatur der Umgebungsluft gesteuert werden kann.

Der dritte Abschnitt 130c der Umgebungsluftleitung 130 kann über den der Kältemaschine 20 angeordneten Verdampfer 27 thermisch mit der Kältemaschine 20 gekoppelt werden. Die Kühlung der Umgebungsluft in der Umgebungsluftleitung 130 durch Wärmeübertragung auf das in der Kältemaschine 20 zirkulierende Kältemittel findet demnach beim Durchströmen des dritte Abschnitts 130c der Umgebungsluftleitung 130 statt. Anschließend wird die gekühlte Umgebungsluft in die Flugzeugkabine A und/oder den Mischer 25 geführt.

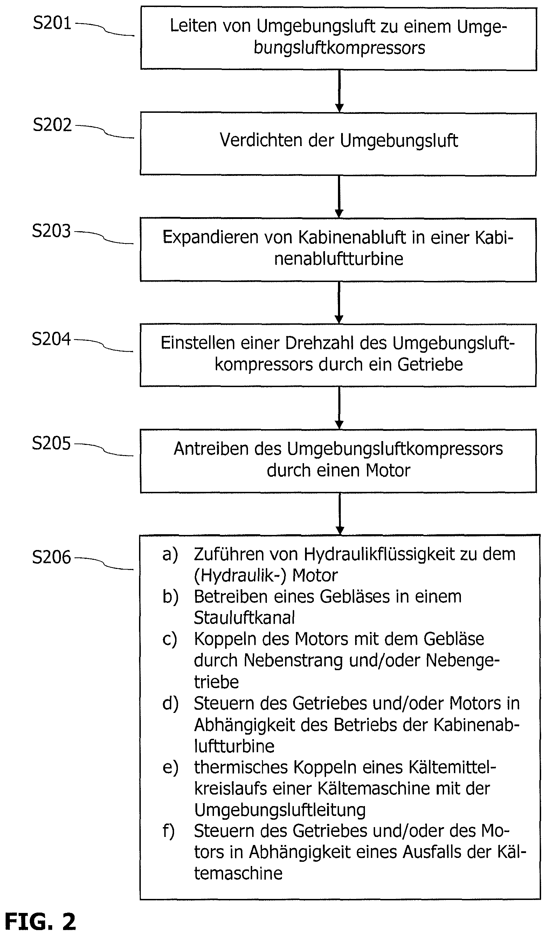

Figur 2 zeigt ein Ablaufdiagramm eines Verfahrens zum Betreiben einer Flugzeugkälteanlage 10. Dabei wird zunächst in Schritt S201 Umgebungsluft durch eine Umgebungsluftleitung 130, die mit der Flugzeugkabine A und/oder einem Mischer 25 der Flugzeugklimaanlage 10 verbunden ist, geleitet, um der Flugzeugkabine A und/oder dem Mischer 25 Umgebungsluft zuzuführen. Die die Umgebungsluftleitung 130 durchströmende Umgebungsluft wird in mindestens einem in der Umgebungsluftleitung 130 angeordneten Umgebungsluftkompressor 101 verdichtet (Schritt S202). Ferner wird in Schritt S203 in einer mit einer Kabinenabluftleitung 120 verbundenen Kabinenabluftturbine 102 die Kabinenabluftleitung 120 durchströmende Kabinenabluft expandiert, wobei die Kabinenabluftturbine 102 mit dem mindestens einen in der Umgebungsluftleitung 130 angeordneten Umgebungsluftkompressor 101 gekoppelt ist und den mindestens einen in der Umgebungsluftleitung 130 angeordneten Umgebungsluftkompressor 101 antreibt.

Ferner kann das Verfahren in Schritt S204 ein Einstellen einer Drehzahl des Umgebungsluftkompressors 101 durch ein Getriebe 103, wobei das Getriebe 103 dazu eingerichtet ist, die Kabinenabluftturbine 102 mit dem Umgebungsluftkompressor 101 zu koppeln, und schließlich in Schritt S205 ein Antreiben des mindestens einen in der Umgebungsluftleitung 130 angeordneten Umgebungsluftkompressors 101 durch einen mit dem Getriebe 103 gekoppelten Motor 104 umfassen.

Der Motor 104 kann ein Hydraulikmotor sein. Ihm wird in dem optionalen Schritt S206a Hydraulikflüssigkeit von einem Hydrauliksystem 40 für die Betätigung eines Fahrwerks (nicht gezeigt) eines Flugzeugs 1 zugeführt.

Ebenfalls optional kann in Schritt S206b Luft in einem Stauluftkanal 30 durch ein Gebläse 111 bewegt werden, wobei in einem optionalen Schritt S206c der Motor 104 mit dem Gebläse 111 durch einen Nebenstrang 112, der dazu eingerichtet ist, das Gebläse 111 anzutreiben, gekoppelt ist. Alternativ oder zusätzlich wird in Schritt S206c der Motor 104 mit dem Gebläse 111 durch ein Nebengetriebe 110, das dazu eingerichtet ist, eine Drehzahl des Gebläses 111 einzustellen, gekoppelt.

Das Verfahren kann zudem verschiedene von einer Steuereinrichtung 105 durchgeführte Steuerungsschritte S206d umfassen. Beispielsweise wird das Getriebe 103 und/oder der Motor 104 in Abhängigkeit des Betriebs der Kabinenabluftturbine 102 gesteuert. Alternativ oder zusätzlich kann das Getriebe 103 und/oder der Motor 104 in Abhängigkeit des Betriebs der Kabinenabluftturbine 102 so gesteuert werden, dass der Umgebungsluftkompressor 101 einen konstanten Volumenstrom verdichteter Umgebungsluft der Flugzeugkabine A und/oder dem Mischer 25 zuführt.

Ein weiterer optionaler Schritt S206e umfasst das thermische Koppeln der Umgebungsluftleitung 130 mit einer Kältemaschine 20 als Wärmesenke, um vor der Zufuhr der Umgebungsluft in die Flugzeugkabine A und/oder den Mischer 25 Wärme von der die Umgebungsluftleitung 130 durchströmenden Umgebungsluft an die Kältemaschine 20 zu übertragen. Dieser Schritt umfasst auch ein Bereitstellen der Kältemaschine 20.

Ebenfalls alternativ oder zusätzlich kann in Schritt S206f das Getriebe 103 und/oder der Motor 104 in Abhängigkeit eines Ausfalls der Kältemaschine 20 so gesteuert werden, dass der Umgebungsluftkompressor 101 einen für Notfälle mindestens erforderlichen Volumenstrom verdichteter Umgebungsluft der Flugzeugkabine A und/oder dem Mischer 25 zuführt und/oder dass der Umgebungsluftkompressor 101 einen für Notfälle mindestens erforderlichen Kabinendruck aufrechterhält.

Figur 3 zeigt schließlich ein Flugzeug 1 mit einer Flugzeugkälteanlage 10.

## Patentansprüche

1. Flugzeugkälteanlage (10) für ein Flugzeug (1), wobei die Flugzeugkälteanlage (10) umfasst:
- eine Umgebungsluftleitung (130), die eine Umgebung (15) des Flugzeugs (1) mit einer Flugzeugkabine (A) verbindet und dazu eingerichtet ist, der Umgebung (15) des Flugzeugs (1) entnommene Umgebungsluft der Flugzeugkabine (A) zuzuführen, und
- mindestens einen in der Umgebungsluftleitung (130) angeordneten Umgebungsluftkompressor (101) zum Verdichten der die Umgebungsluftleitung (130) durchströmenden Umgebungsluft, und
- eine Kabinenabluftleitung (120), die die Flugzeugkabine (A) mit der Umgebung (15) des Flugzeugs (1) verbindet und dazu eingerichtet ist, der Flugzeugkabine (A) entnommene Kabinenabluft in die Umgebung (15) des Flugzeugs (1) abzuführen,
- eine Kabinenabluftturbine (102), die mit der Kabinenabluftleitung (120) verbunden und mit dem mindestens einen in der Umgebungsluftleitung (130) angeordneten Umgebungsluftkompressor (101) gekoppelt ist und die dazu eingerichtet ist, die die Kabinenabluftleitung (120) durchströmende Kabinenabluft zu expandieren und den mindestens einen in der Umgebungsluftleitung (130) angeordneten Umgebungsluftkompressor (101) anzutreiben, **gekennzeichnet durch**
- ein Getriebe (103), das die Kabinenabluftturbine (102) mit dem Umgebungsluftkompressor (101) koppelt und dazu eingerichtet ist, eine Drehzahl des Umgebungsluftkompressors (101) einzustellen, und
- einen mit dem Getriebe (103) gekoppelten Motor (104), der dazu eingerichtet ist, den mindestens einen in der Umgebungsluftleitung (130) angeordneten Umgebungsluftkompressor (101) anzutreiben.

2. Flugzeugkälteanlage (10) nach Anspruch 1,
**dadurch gekennzeichnet, dass** der Motor (104) ein Hydraulikmotor ist.

3. Flugzeugkälteanlage (10) nach Anspruch 2,
**dadurch gekennzeichnet, dass** der Hydraulikmotor (104) dazu eingerichtet ist, an ein Hydrauliksystem (40) für die Betätigung eines Fahrwerks des mit der Flugzeugkälteanlage (10) ausgestatteten Flugzeugs (1) angeschlossen zu werden.

4. Flugzeugkälteanlage (10) nach einem der Ansprüche 1 bis 3,
**gekennzeichnet durch**
- ein Gebläse (111), das dazu eingerichtet ist, Luft in einem Stauluftkanal (30) zu bewegen, und
- einen Nebenstrang (112), der mit dem Motor (104) und dem Gebläse (111) gekoppelt ist und dazu eingerichtet ist, das Gebläse (111) anzutreiben, und/oder
- ein Nebengetriebe (110) das dazu eingerichtet ist, den Motor (104) mit dem Gebläse (111) zu koppeln und eine Drehzahl des Gebläses (111) einzustellen.

5. Flugzeugkälteanlage (10) nach einem der Ansprüche 1 bis 4,
**gekennzeichnet durch**
- eine thermische Kopplungseinrichtung (27), die dazu eingerichtet ist, mit einer Kältemaschine (20) als Wärmesenke verbunden zu werden, um vor der Zufuhr der Umgebungsluft in die Flugzeugkabine (A) Wärme von der die Umgebungsluftleitung (130) durchströmenden Umgebungsluft an die Kältemaschine (20) zu übertragen.

6. Flugzeugkälteanlage (10) nach einem der Ansprüche 1 bis 5,
**gekennzeichnet durch**
- eine Steuereinrichtung (105), die dazu eingerichtet ist, das Getriebe (103) und/oder den Motor (104) in Abhängigkeit des Betriebs der Kabinenabluftturbine (102) zu steuern.

7. Flugzeugkälteanlage (10) nach einem der Ansprüche 1 bis 6,
**gekennzeichnet durch**
- ein Kabinenabluftventil (125), das stromabwärts der Kabinenabluftturbine (102) angeordnet ist und dazu eingerichtet ist, die die Kabinenabluftleitung (120) durchströmende Kabinenabluft wahlweise über einen ersten Abschnitt (123) der Kabinenabluftleitung (120) in einen Stauluftkanal (30) stromaufwärts mindestens eines in dem Stauluftkanal (30) angeordneten Wärmetauschers (22) oder über einen zweiten Abschnitt (124) der Kabinenabluftleitung (120) zu einem Auslass (127), der die Kabinenabluft in eine Richtung entgegengesetzt einer Flugrichtung des mit der Flugzeugkälteanlage (10) ausgestatteten Flugzeugs (1) in die Umgebung (15) des Flugzeugs (1) ablässt, leitet.

8. Flugzeugkälteanlage (10) nach Anspruch 7,
**dadurch gekennzeichnet, dass** das Kabinenabluftventil (125) mit einem Temperatursensor ausgestattet ist, der dazu eingerichtet ist, die die Kabinenabluftleitung (120) durchströmende Kabinenabluft stromabwärts der Kabinenabluftturbine (102) zu messen und basierend auf der gemessenen Temperatur der Kabinenabluft das Kabinenabluftventil (125) zu steuern.

9. Verfahren zum Betreiben einer Flugzeugkälteanlage (10) für ein Flugzeug (1), umfassend:
- Leiten (S201) von Umgebungsluft durch eine Umgebungsluftleitung (130), die eine Umgebung (15) des Flugzeugs mit einer Flugzeugkabine (A) verbindet, um der Flugzeugkabine (A) der Umgebung des Flugzeugs (1) entnommene Umgebungsluft zuzuführen, und
- Verdichten (S202) der die Umgebungsluftleitung (130) durchströmenden Umgebungsluft in mindestens einem in der Umgebungsluftleitung (130) angeordneten Umgebungsluftkompressor (101),
- Expandieren (S203) von eine die Flugzeugkabine (A) mit der Umgebung (15) des Flugzeugs (1) verbindenden Kabinenabluftleitung (120) durchströmender Kabinenabluft in einer Kabinenabluftturbine (102), die mit der Kabinenabluftleitung (120) verbunden ist und mit dem mindestens einen in der Umgebungsluftleitung (130) angeordneten Umgebungsluftkompressor (101) gekoppelt ist, und den mindestens einen in der Umgebungsluftleitung (130) angeordneten Umgebungsluftkompressor (101) antreibt,
- Abführen der der Flugzeugkabine (A) entnommenen Kabinenabluft in die Umgebung (15) des Flugzeugs (1), **gekennzeichnet durch**
- Einstellen (S204) einer Drehzahl des Umgebungsluftkompressors (101) durch ein Getriebe (103), das die Kabinenabluftturbine (102) mit dem Umgebungsluftkompressor (101) koppelt, und
- Antreiben (S205) des mindestens einen in der Umgebungsluftleitung (130) angeordneten Umgebungsluftkompressors (101) durch einen mit dem Getriebe (103) gekoppelten Motor (104).

10. Verfahren nach Anspruch 9, wobei der Motor (104) ein Hydraulikmotor ist,
**gekennzeichnet durch**
- Zuführen (S206a) von Hydraulikflüssigkeit zu dem Hydraulikmotor (104) von einem Hydrauliksystem (40) für die Betätigung eines Fahrwerks des Flugzeugs.

11. Verfahren nach Anspruch 9 oder 10,
**gekennzeichnet durch**
- Bewegen (S206b) von Luft in einem Stauluftkanal durch ein Gebläse (111), und
- Koppeln (S206c) des Motors (104) mit dem Gebläse (111) durch einen Nebenstrang (112), der dazu eingerichtet ist, das Gebläse (111) anzutreiben, und/oder
- Koppeln (S206c) des Motors (104) mit dem Gebläse (111) durch ein Nebengetriebe (110), das dazu eingerichtet ist, eine Drehzahl des Gebläses (111) einzustellen.

12. Verfahren nach einem der Ansprüche 9 bis 11,
**gekennzeichnet durch**
- Steuern (S206d) des Getriebes (103) und/oder des Motors (104) in Abhängigkeit des Betriebs der Kabinenabluftturbine (102).

13. Verfahren nach Anspruch 12,
**gekennzeichnet durch**
- Steuern (S206d) des Getriebes (103) und/oder des Motors (104) in Abhängigkeit des Betriebs der Kabinenabluftturbine (102), sodass der Umgebungsluftkompressor (101) der Flugzeugkabine (A) die Umgebungsluftleitung (130) durchströmende Umgebungsluft auf einen Soll-Kabinendruck verdichtet zuführt und/oder der Flugzeugkabine (A) einen konstanten Volumenstrom verdichteter Umgebungsluft zuführt.

14. Verfahren nach einem der Ansprüche 9 bis 13,
**gekennzeichnet durch**
- Bereitstellen einer Kältemaschine (20), und
- thermisches Koppeln (S206e) der Umgebungsluftleitung (130) mit der Kältemaschine (20) als Wärmesenke, um vor der Zufuhr der Umgebungsluft in die Flugzeugkabine (A) Wärme von der die Umgebungsluftleitung (130) durchströmenden Umgebungsluft an die Kältemaschine (20) zu übertragen.

15. Verfahren nach Anspruch 14,
**gekennzeichnet durch**
- Steuern (S206f) des Getriebes (103) und/oder des Motors (104) in Abhängigkeit eines Ausfalls der Kältemaschine (20), sodass der Umgebungsluftkompressor (101) einen für Notfälle mindestens erforderlichen Volumenstrom verdichteter Umgebungsluft der Flugzeugkabine (A) zuführt und/oder dass der Umgebungsluftkompressor (101) einen für Notfälle mindestens erforderlichen Kabinendruck aufrechterhält.

## Claims

1. An aircraft refrigeration system (10) for an aircraft (1), said aircraft refrigeration system (10) comprising:
- an ambient air line (130) connecting an environment (15) of the aircraft (1) to an aircraft cabin (A) and adapted to supply ambient air taken from the environment (15) of the aircraft (1) to the aircraft cabin (A), and
- at least one ambient air compressor (101) arranged in the ambient air line (130) for compressing the ambient air flowing through the ambient air line (130), and
- a cabin exhaust air line (120), which connects the aircraft cabin (A) to the environment (15) of the aircraft (1) and is arranged to discharge cabin exhaust air taken from the aircraft cabin (A) into the environment (15) of the aircraft (1),
- a cabin exhaust air turbine (102), which is connected to the cabin exhaust air line (120) and coupled to the at least one ambient air compressor (101) arranged in the ambient air line (130) and which is arranged to expand the cabin exhaust air flowing through the cabin exhaust air line (120) and to drive the at least one ambient air compressor (101) arranged in the ambient air line (130),
**characterized in that**
- a transmission (103) coupling the cabin exhaust air turbine (102) to the ambient air compressor (101) and adapted to adjust a rotational speed of the ambient air compressor (101), and
- a motor (104) coupled to the transmission (103) and adapted to drive the at least one ambient air compressor (101) disposed in the ambient air line (130).

2. Aircraft refrigeration system (10) according to claim 1,
**characterized in that** the motor (104) is a hydraulic motor.

3. Aircraft refrigeration system (10) according to claim 2,
**characterized in that** the hydraulic motor (104) is adapted to be connected to a hydraulic system (40) for operating a landing gear of the aircraft (1) equipped with the aircraft refrigeration system (10).

4. Aircraft refrigeration system (10) according to any one of claims 1 to 3,
**characterized by**
- a fan (111) adapted to move air in a ram air duct (30), and
- an auxiliary train (112) coupled to the motor (104) and the fan (111) and adapted to drive the fan (111), and/or
- an auxiliary transmission (110) adapted to couple the motor (104) to the fan (111) and to adjust a speed of the fan (111).

5. Aircraft refrigeration system (10) according to any one of claims 1 to 4,
**characterized by**
- a thermal coupling device (27) adapted to be connected to a refrigeration device (20) as a heat sink to transfer heat from the ambient air flowing through the ambient air line (130) to the refrigeration device (20) prior to the supply of ambient air into the aircraft cabin (A).

6. Aircraft refrigeration system (10) according to any one of claims 1 to 5,
**characterized by**
- a control device (105) adapted to control the transmission (103) and/or the motor (104) in response to the operation of the cabin exhaust air turbine (102).

7. Aircraft refrigeration system (10) according to any one of claims 1 to 6,
**characterized by**
- a cabin exhaust air valve (125) arranged downstream of the cabin exhaust air turbine (102) and adapted to selectively direct the cabin exhaust air flowing through the cabin exhaust air line (120) via a first section (123) of the cabin exhaust air line (120) into a ram air duct (30) upstream of at least one heat exchanger (22) arranged in the ram air duct (30) or via a second section (124) of the cabin exhaust air line (120) to an outlet (127), which discharges the cabin exhaust air in a direction counter to a direction of flight of the aircraft (1) equipped with the aircraft refrigeration system (10) into the environment (15) of the aircraft (1).

8. Aircraft refrigeration system (10) according to claim 7,
**characterized in that** the cabin exhaust air valve (125) is provided with a temperature sensor adapted to measure the cabin exhaust air flowing through the cabin exhaust air line (120) downstream of the cabin exhaust air turbine (102) and to control the cabin exhaust air valve (125) based on the measured temperature of the cabin exhaust air.

9. A method of operating an aircraft refrigeration system (10) for an aircraft (1),
comprising:
- passing (S201) ambient air through an ambient air line (130) connecting an environment (15) of the aircraft to an aircraft cabin (A) to supply ambient air taken from the environment of the aircraft (1) to the aircraft cabin (A); and
- compressing (S202) the ambient air flowing through the ambient air line (130) in at least one ambient air compressor (101) arranged in the ambient air line (130),
- expanding (S203) cabin exhaust air flowing through a cabin exhaust air line (120) connecting the aircraft cabin (A) to the environment (15) of the aircraft (1) in a cabin exhaust air turbine (102) connected to the cabin exhaust air line (120) and coupled to the at least one ambient air compressor (101) arranged in the ambient air line (130) and driving the at least one ambient air compressor (101) arranged in the ambient air line (130),
- discharging the cabin exhaust air taken from the aircraft cabin (A) into the environment (15) of the aircraft (1),
**characterized by**
- adjusting (S204) a speed of the ambient air compressor (101) by a transmission (103) coupling the cabin exhaust air turbine (102) to the ambient air compressor (101), and
- driving (S205) the at least one ambient air compressor (101) disposed in the ambient air line (130) by a motor (104) coupled to the transmission (103).

10. Method according to claim 9, wherein the motor (104) is a hydraulic motor, **characterized by**
- supplying (S206a) hydraulic fluid to the hydraulic motor (104) from a hydraulic system (40) for actuating a landing gear of the aircraft.

11. Method according to claim 9 or 10,
**characterized by**
- moving (S206b) air in a ram air duct through a fan (111), and
- coupling (S206c) the motor (104) to the fan (111) through an auxiliary train (112) adapted to drive the fan (111), and/or
- coupling (S206c) of the motor (104) to the fan (111) by means of an auxiliary transmission (110) adapted to adjust a speed of the fan (111).

12. Method according to any one of claims 9 to 11,
**characterized by**
- controlling (S206d) the transmission (103) and/or the motor (104) in dependence of the operation of the cabin exhaust air turbine (102).

13. Method according to claim 12,
**characterized by**
- controlling (S206d) the transmission (103) and/or the motor (104) in dependence of the operation of the cabin exhaust air turbine (102), such that the ambient air compressor (101) supplies ambient air flowing through the ambient air line (130) to the aircraft cabin (A) compressed to a target cabin pressure and/or supplies a constant volume flow of compressed ambient air to the aircraft cabin (A).

14. Method according to any one of claims 9 to 13,
**characterized by**
- providing a refrigeration device (20), and
- thermally coupling (S206e) the ambient air line (130) to the refrigeration device (20) as a heat sink to transfer heat from the ambient air flowing through the ambient air line (130) to the refrigeration device (20) prior to supplying the ambient air to the aircraft cabin (A).

15. Method according to claim 14,
**characterized by**
- controlling (S206f) the transmission (103) and/or the motor (104) in response to a failure of the refrigeration device (20) such that the ambient air compressor (101) supplies a minimum required volume flow of compressed ambient air to the aircraft cabin (A) for emergencies and/or that the ambient air compressor (101) maintains a minimum required cabin pressure for emergencies.

## Revendications

1. Système de réfrigération d'avion (10) pour un avion (1), ledit système de réfrigération d'avion (10) comprend :
- une conduite d'air ambiant (130) qui relie un environnement (15) de l'avion (1) à une cabine d'avion (A) et qui est conçue pour amener de l'air ambiant prélevé dans l'environnement (15) de l'avion (1) à la cabine d'avion (A), et
- au moins un compresseur d'air ambiant (101) disposé dans la conduite d'air ambiant (130) pour comprimer l'air ambiant traversant la conduite d'air ambiant (130), et
- une conduite d'évacuation d'air de cabine (120) qui relie la cabine d'avion (A) à l'environnement (15) de l'avion (1) et qui est conçue pour évacuer l'air d'évacuation de cabine prélevé de la cabine d'avion (A) dans l'environnement (15) de l'avion (1),
- une turbine d'évacuation d'air de cabine (102) qui est reliée à la conduite d'évacuation d'air de cabine (120) et couplée à l'au moins un compresseur d'air ambiant (101) disposé dans la conduite d'air ambiant (130) et qui est conçue pour détendre l'air d'évacuation de cabine traversant la conduite d'évacuation d'air de cabine (120) et pour entraîner l'au moins un compresseur d'air ambiant (101) disposé dans la conduite d'air ambiant (130),
**caractérisé par**
- un transmission (103) qui couple la turbine d'évacuation d'air de cabine (102) avec le compresseur d'air ambiant (101) et qui est conçu pour régler une vitesse de rotation du compresseur d'air ambiant (101), et
- un moteur (104) couplé à la transmission (103) et adapté pour entraîner le au moins un compresseur d'air ambiant (101) disposé dans la conduite d'air ambiant (130).

2. Système de réfrigération d'avion (10) selon la revendication 1,
**caractérisé en ce que** le moteur (104) est un moteur hydraulique.

3. Système de réfrigération d'avion (10) selon la revendication 2,
**caractérisé en ce que** le moteur hydraulique (104) est adapté pour être raccordé à un système hydraulique (40) pour l'actionnement d'un train d'atterrissage de l'avion (1) équipé du système de réfrigération d'avion (10).

4. Système de réfrigération d'avion (10) selon l'une quelconque des revendications 1 à 3, **caractérisé par**
- un ventilateur (111) adaptée pour déplacer de l'air dans un canal d'air de retenue (30) déplacer, et
- une branche secondaire (112) couplée au moteur (104) et au ventilateur (111) et adaptée pour entraîner le ventilateur (111), et/ou
- une transmission auxiliaire (110) qui est conçue pour coupler le moteur (104) au ventilateur (111) et pour régler une vitesse de rotation du ventilateur (111).

5. Système de réfrigération d'avion (10) d'avion selon l'une quelconque des revendications 1 à 4,
**caractérisé par**
- un dispositif de couplage thermique (27) adapté pour être relié à une machine frigorifique (20) en tant que puits de chaleur, afin de transférer la chaleur de l'air ambiant traversant la conduite d'air ambiant (130) à la machine frigorifique (20) avant l'introduction de l'air ambiant dans la cabine d'avion (A).

6. Système de réfrigération d'avion (10) selon l'une quelconque des revendications 1 à 5,
**caractérisé par**
- un dispositif de commande (105) adapté pour commander la transmission (103) et/ou le moteur (104) en fonction du fonctionnement de la turbine d'évacuation d'air de cabine (102).

7. Système de réfrigération d'avion (10) selon l'une quelconque des revendications 1 à 6,
**caractérisé par**
- une vanne d'évacuation d'air de cabine (125), qui est disposée en aval de la turbine d'évacuation d'air de cabine (102) et qui est conçue pour évacuer l'air d'évacuation de cabine traversant la conduite d'évacuation d'air de cabine (120) au choix par une première section (123) de la conduite d'évacuation d'air de cabine (120) dans un canal d'air de retenue (30) en amont d'au moins un échangeur de chaleur (22) disposé dans le canal d'air de retenue (30) ou par une deuxième section (124) de la conduite d'évacuation d'air de cabine (120) vers une sortie (127), qui évacue l'air d'évacuation de cabine dans une direction opposée à une direction de vol de l'avion (1) équipé du système de réfrigération d'avion (10), dans l'environnement (15) de l'avion (1).

8. Système de réfrigération d'avion (10) selon la revendication 7,
**caractérisé en ce que** la vanne d'évacuation d'air de cabine (125) est équipée d'un capteur de température adapté pour mesurer l'air d'évacuation de cabine traversant la conduite d'évacuation d'air de cabine (120) en aval de la turbine d'évacuation d'air de cabine (102) et pour commander la vanne d'évacuation d'air de cabine (125) sur la base de la température d'air d'évacuation de cabine mesurée.

9. Procédé d'exploitation d'un système de réfrigération d'avion (10) pour un avion (1), comprenant :
- faire passer (S201) de l'air ambiant à travers une conduite d'air ambiant (130) qui relie un environnement (15) de l'avion à une cabine d'avion (A), afin de fournir à la cabine d'avion (A) de l'air ambiant prélevé dans l'environnement de l'avion (1), et
- comprimer (S202) l'air ambiant traversant la conduite d'air ambiant (130) dans au moins un compresseur d'air ambiant (101) disposé dans la conduite d'air ambiant (130),
- Détendre (S203) l'air d'évacuation de cabine traversant une conduite d'évacuation d'air de cabine (120) reliant la cabine d'avion (A) à l'environnement (15) de l'avion (1) dans une turbine d'évacuation d'air de cabine (102) qui est reliée à la conduite d'évacuation d'air de cabine (120) et qui est couplée à l'au moins un compresseur d'air ambiant (101) disposé dans la conduite d'air ambiant (130) et qui entraîne l'au moins un compresseur d'air ambiant (101) disposé dans la conduite d'air ambiant (130),
- évacuer l'air d'évacuation de cabine d'avion (A) dans l'environnement (15) de l'avion (1), **caractérisé par**
- ajuster (S204) une vitesse de rotation du compresseur d'air ambiant (101) par une transmission (103) qui couple la turbine d'évacuation d'air de cabine (102) au compresseur d'air ambiant (101), et
- Entraînement (S205) du au moins un compresseur d'air ambiant (101) disposé dans la conduite d'air ambiant (130) par un moteur (104) couplé a la transmission (103).

10. Procédé selon la revendication 9, dans lequel le moteur (104) est un moteur hydraulique,
**caractérisé par**
- fournir (S206a) du fluide hydraulique au moteur hydraulique (104) à partir d'un système hydraulique (40) pour l'actionnement d'un train d'atterrissage de l'avion.

11. Procédé selon les revendications 9 ou 10,
**caractérisé par**
- déplacer (S206b) de l'air dans un conduit d'air dynamique par un ventilateur (111), et
- coupler (S206c) le moteur (104) au ventilateur (111) par une branche secondaire (112) adaptée pour entraîner le ventilateur (111), et/ou
- coupler (S206c) le moteur (104) au ventilateur (111) par une transmission auxiliaire (110) adapté pour ajuster une vitesse de rotation du ventilateur (111).

12. Procédé selon l'une quelconque des revendications 9 à 11,
**caractérisé par**
- commander (S206d) la transmission (103) et/ou le moteur (104) en fonction du fonctionnement de la turbine d'évacuation d'air de cabine (102).

13. Procédé selon la revendication 12,
**caractérisé par**
- commander (S206d) la transmission (103) et/ou le moteur (104) en fonction du fonctionnement de la turbine d'évacuation d'air de cabine (102), de sorte que le compresseur d'air ambiant (101) fournit à la cabine d'avion (A) de l'air ambiant traversant la conduite d'air ambiant (130) comprimé à une pression de consigne de la cabine et/ou fournit à la cabine d'avion (A) un débit volumique constant d'air ambiant comprimé.

14. Procédé selon l'une quelconque des revendications 9 à 13,
**caractérisé par**
- la mise à disposition d'une machine frigorifique (20), et
- coupler thermiquement (S206e) la conduite d'air ambiant (130) à la machine frigorifique (20) en tant que puits de chaleur pour transférer de la chaleur de l'air ambiant circulant dans la conduite d'air ambiant (130) à la machine frigorifique (20) avant l'introduction de l'air ambiant dans la cabine d'avion (A).

15. Procédé selon la revendication 14,
**caractérisé par**
- commander (S206f) la transmission (103) et/ou le moteur (104) en fonction d'une panne de la machine frigorifique (20), de sorte que le compresseur d'air ambiant (101) amène un débit volumétrique d'air ambiant comprimé au moins nécessaire pour les cas d'urgence dans la cabine d'avion (A) et/ou que le compresseur d'air ambiant (101) maintienne une pression de cabine au moins nécessaire pour les cas d'urgence.
